# EUROPÄISCHE PATENTSCHRIFT

(11) **EP 2 511 440 B1**
(45) Veröffentlichungstag und Bekanntmachung des Hinweises auf die Patenterteilung: **13.12.2017**
(21) Anmeldenummer: 12002340.3
(22) Anmeldetag: 30.03.2012
(51) Int. Cl.: E04B 1/76, F16B 13/12, B25B 31/00, B25D 1/16

(54) **System, Werkzeug und Verfahren zur Befestigung von Dämmplatten**
System, tool and method for attaching insulating boards
Système, outil et procédé de fixation de plaques d'isolation

(30) Priorität: 11.04.2011 DE 102011016687
(43) Veröffentlichungstag der Anmeldung: 17.10.2012
(73) Patentinhaber: EJOT Baubefestigungen GmbH, 57334 Bad Laasphe (DE)
(72) Erfinder: Tiemann, Joachim, 59846 Sundern (DE)
(74) Vertreter: Von Rohr Patentanwälte Partnerschaft mbB

(56) Entgegenhaltungen:
- DE-A1- 19 536 171
- DE-A1-102008 061 430
- US-A- 4 029 135

## Beschreibung

Die vorliegende Erfindung betrifft ein System zur Befestigung von Dämmplatten mit Dübeln an einem Bauwerk gemäß dem Oberbegriff des Anspruchs 1, ein Werkzeug zum Setzen von Dübeln gemäß dem Oberbegriff des Anspruchs 5 sowie ein Verfahren zum Befestigen von Dämmplatten an einem Bauwerk gemäß dem Oberbegriff des Anspruchs 10 und eine Verwendung eines Werkzeugs zum Setzen von Dübeln zur Befestigung von Dämmplatten.

Die vorliegende Erfindung befasst sich generell mit der Befestigung von Dämmplatten an einem Bauwerk. Bei den Dämmplatten handelt es sich insbesondere um sogenannte Dämmstoffplatten oder Wärmedämmplatten, Jedoch kann es sich auch um sonstige Fassadenplatten o. dgl. handeln.

Die Dämmplatten sind üblicherweise aus einem verhältnismäßig weichen oder nicht hoch belastbaren Dämmstoff, wie expandiertes Polystyrol o. dgl., hergestellt. Dementsprechend ist eine sichere Befestigung wichtig.

Die Befestigung der Dämmplatten erfolgt an einem Bauwerk, insbesondere an einem Haus oder sonstigen Gebäude, an einer Fassade, Wand oder Decke. Jedoch kann die Befestigung vorzugsweise grundsätzlich auch an einer sonstigen Unterkonstruktion erfolgen. Der Begriff "Bauwerk" ist daher vorzugsweise in einem entsprechend weiten Sinne zu verstehen.

Üblicherweise werden die Dämmplatten an dem Bauwerk angeklebt und zusätzlich mit Dübeln gesichert. Die befestigten Dämmplatten werden dann üblicherweise verputzt. Wichtig ist unter anderem, dass eine gute Dämmung, insbesondere Wärmedämmung, erreicht wird, besonders bevorzugt keine Wärmebrücken gebildet werden, dass sich die Dübel, insbesondere deren Teller o. dgl., von außen nicht abzeichnen und dass eine einfache baustellengerechte Befestigung bzw. Montage ermöglicht wird.

Die DE 195 36 171 Al offenbart ein Befestigungselement für die Befestigung von wärmeisolierenden Platten an einer Unterkonstruktion mit einem Stift und einem Kopf, der mit einem Kunststoffmantel gebildet ist, sowie einem Halteteil aus Kunststoff, das eine Druckplatte, eine den Stift führende Hülse und eine zwischen dieser Hülse und der Druckplatte angeordnete Ausnehmung zur Aufnahme des Stiftkopfes nach dessen vollständigen Einbringen aufweist.

Die US 4,029,135 offenbart eine Nagelhalteeinrichtung mit einem länglichen Körper, wobei in einem vorderen Teil des Körpers eine seitliche Ausnehmung vorgesehen ist, in die ein Nagel seitlich einlegbar ist, wobei der eingelegte Nagel mittels den Nagelhalte-einrichtung in einen Gegenstand eingebracht werden kann.

Die DE 195 36 171 A1 sieht Dübel mit Dübeltellern an der Dämmplattenoberfläche vor. Dies ist insbesondere im Hinblick auf Dübelabzeichnungen problematisch. Insbesondere ist es nämlich schwierig, die Dübel so zu setzen (positionieren), dass die Dübelteller glatt mit der Oberfläche der Dämmplatten abschließen. Anschließend wird ein zunächst vorragendes Spreizelement in den jeweiligen Dübel vollständig eingeführt bzw. eingeschlagen, um den Dübelschaft aufzuspreizen und dadurch den Dübel in einem zugeordneten Bohrloch fest zu legen.

Die DE 10 2008 061 430 A1, die den Ausgangspunkt der vorliegenden Erfindung bildet, offenbart ein Werkzeug zum Setzen von Dübeln, wobei eine oberflächenbündige Montage bzw. Positionierung des jeweiligen Dübeltellers erreicht werden soll. Das Werkzeug weist einen Grundkörper und ein bewegbares Kolbenelement auf. Das Kolbenelement ist als dünner Stift ausgeführt und ragt nach vorne über den Grundkörper vor. Dieser Teil des Kolbenelements muss zunächst axial in den möglichst dünn gestalteten Dübelschaft eingeführt werden. Dies erfordert einiges Geschick und ist relativ schlecht sichtbar, da das Werkzeug die Einführöffnung überdeckt. Das Dokument offenbart ein System, das die Merkmale des Oberbegriffes des Anspruchs 1 aufweist, ein Werkzeug, das die Merkmale des Oberbegriffes des Anspruchs 5 aufweist, und ein Verfahren, das die Merkmale des Oberbegriffes des Anspruchs 10 aufweist. Das Kolbenelement ragt auch nach hinten aus dem Werkzeug heraus und bildet ein Schlagende. Nach dem Ansetzen des Werkzeugs am bereits in die Dämmplatte eingeführten Dübel wird durch Schlagen auf das Schlagende zunächst der Dübel gesetzt, also in die Dämmplatte und eine sich anschließende Bohrung getrieben. Hierbei wird dann der Dübelteller idealerweise in die Dämmplatte derart eingedrückt, dass er zumindest im Wesentlichen flächenbündig mit der Oberfläche der Dämmplatte abschließt. Bei Überschreiten einer gewissen Kraft oder eines gewissen Weges öffnet eine Sperre in dem Werkzeug, so dass bei weiterem Schlagen auf das Schlagende nun das Kolbenelement relativ zum Grundkörper axial vorschiebbar ist, um ein in den Dübelschaft bereits befindliches Spreizelement weiter nach vorn zu treiben und so den Schaft im Bohrloch aufzuspreizen.

In der Praxis ist es problematisch, dass die Kraft bzw. der Weg zum Entkoppeln des Kolbenelements vom Grundkörper bereits vor dem korrekten Setzen des Dübels bzw. Eindrücken des Dübeltellers in die Dämmplatte überschritten und dadurch das Kolbenelement vom Grundkörper vorzeitig entkoppelt werden kann. Beim weiteren Schlagen auf das Schlagende erfolgt dann ein vorzeitiges Spreizen des Dübelschafts. Dementsprechend ist ein korrektes Setzen des Dübels nicht mehr oder allenfalls nur noch sehr schwierig möglich.

Ein weiterer Nachteil des bekannten Werkzeugs besteht darin, dass dieses sehr aufwendig aufgebaut ist und insbesondere bewegliche Teile enthält.

Der vorliegenden Erfindung liegt die Aufgabe zugrunde, ein System zur Befestigung von Dämmplatten, ein Werkzeug zum Setzen von Dübeln zur Befestigung von Dämmplatten und ein Verfahren oder eine Verwendung zum Befestigen von Dämmplatten anzugeben, wobei eine einfache und schnelle Montage vor Ort ermöglicht wird, wobei ein einfaches und/oder genaues Setzen bzw. Positionieren von Dübeln ermöglicht wird, wobei ein Abzeichnen von Dübeln vermieden oder zumindest minimiert wird und/oder wobei ein einfacher und/oder kostengünstiger Aufbau des Werkzeugs ermöglicht wird.

Die obige Aufgabe wird durch ein System gemäß Anspruchs 1, ein Werkzeug gemäß Anspruch 5, ein Verfahren gemäß Anspruch 10 oder eine Verwendung gemäß Anspruch 11 gelöst. Vorteilhafte Weiterbildungen sind Gegenstand der Unteransprüche.

Die vorliegende Erfindung befasst sich mit der Befestigung von Dämmmaterial, insbesondere in Form von Dämmplatten, mit Dübeln an einem Bauwerk. Die Dübel weisen jeweils einen auf einer Dämmplattenseite anlegbaren Dübelteller und einen sich anschließenden Dübelschaft auf. Der Dübelschaft ist mittels eines insbesondere stiftförmigen, besonders bevorzugt bereits vormontierten Spreizelements aufspreizbar. Im noch nicht aufgespreizten Zustand ragt das Spreizelement mit einem Teil über den Dübelteller nach außen vor. Der Dübel wird zunächst gesetzt (positioniert), wobei der Dübelschaft in eine Bohrung durch das Dämmmaterial hindurch in das Bauwerk eingeführt wird und der Dübelteller auf der Außenseite der Dämmplatte derart eingedrückt wird, dass der Dübelteller bzw. dessen Außenseite zumindest im Wesentlichen eben oder flächenbündig mit der Außenseite der jeweiligen Dämmplatte abschließt. Anschließend wird das Spreizelement vollständig in den Dübel bzw. Dübelschaft eingeführt, insbesondere eingeschlagen. Besonders bevorzugt handelt es sich um sogenannte Teller- bzw. Schlagdübel.

Ein Aspekt der vorliegenden Erfindung liegt darin, dass das Setzen des Dübels mittels eines Werkzeugs erfolgt, das eine nach vorne bzw. zum Dübel hin offene Aussparung mit einer seitlichen Öffnung bzw. Freimachung zur seitlichen bzw. radialen Aufnahme des über den Dübelteller vorragenden Teils des Spreizelements aufweist. Dies vereinfacht die Handhabung wesentlich. Insbesondere kann das Spreizelement problemlos in das Werkzeug eingeführt werden. Wenn das Werkzeug nur eine axiale Öffnung zum Einführen des Spreizelements aufweisen würde, wäre hingegen das Einführen äußerst problematisch, da die axiale Öffnung für einen Benutzer bei der Montage nicht oder nur sehr schwer sichtbar ist.

Ein weiterer Aspekt der vorliegenden Erfindung liegt darin, dass mittels des Werkzeugs nur ein Setzen, also korrektes Positionieren, des Dübels erfolgt. Das Einführen bzw. Einschlagen des Spreizelements erfolgt hingegen vorzugsweise separat, insbesondere erst nach Entfernen des Werkzeugs. Dies gestattet eine sehr einfache Handhabung und/oder einen sehr einfachen und/oder kostengünstigen Aufbau des Werkzeugs. Des weiteren gestattet dies ein optimales Setzen des Dübels, beispielsweise auch unter schwierigen Bedingungen, insbesondere wenn das Bohrloch teilweise durch Bohrmehl verstopft ist und dementsprechend eine größere Kraft auf den Dübel zum Setzen (Positionieren) ausgeübt werden muss.

Gemäß einem anderen Aspekt der vorliegenden Erfindung weist das Werkzeug einen Werkzeugkopf zum Eindrücken des Dübeltellers in eine zugeordnete Dämmplatte auf. Der Werkzeugkopf ist vorzugsweise größer als der Dübelteller ausgebildet und/oder ragt über diesen seitlich über, so dass sich der Werkzeugkopf beim Setzen des Dübels auf der Außenseite der Dämmplatte abstützt. Hierdurch kann erreicht werden, dass das Setzen des Dübels sehr genau bzw. immer zumindest im Wesentlichen flächenbündig zu der Oberfläche der Dämmplatte erfolgt. Vorzugsweise ist der Werkzeugkopf derart groß dimensioniert, dass eine ausreichend große Auflagefläche auf der Dämmplatte erzeugt wird, um das Risiko eines übermäßigen Eindrückens des Dübeltellers in die Dämmplatte auch bei hoher Krafteinwirkung in der Praxis zu vermeiden oder zumindest zu minimieren. An dem Werkzeugkopf schließt sich, insbesondere einstückig, ein Schaftbereich des Werkzeugs an, wobei der Schaftbereich und der Werkzeugkopf vorzugsweise eine sich primär axial erstreckende bzw. zum Dübel hin offene Aussparung zur Aufnahme des über den jeweiligen Dübeltellers vorragenden Teils eines Spreizelements aufweist. Der Werkzeugkopf und der Schaftbereich sind seitlich offen ausgebildet bzw. freigemacht, so dass eine seitliche bzw. radiale Aufnahme des vorragenden Teils des Spreizelements in die Ausnehmung ermöglicht wird. Dies erleichtert die Handhabung des Werkzeugs wesentlich. Der Werkzeugkopf ist seitlich sektorartig ausgespart bzw. eingeschnitten. Der Sektorwinkel beträgt vorzugsweise weniger als 180°, insbesondere weniger als 120°, besonders bevorzugt weniger als 60°, und/oder vorzugsweise mehr als 10°, insbesondere mehr als 20°, und/oder insbesondere in Wesentlichen etwa 30° bis 40°. Durch die sich entlang des sektorartigen Einschnitts oder Ausschnitts erstreckenden Kanten des Werkzeugkopfs wird insbesondere eine Einführschräge zum seitlichen Einführen des vorragenden Teils des Spreizelements gebildet, wodurch eine besonders leichte Handhabung bzw. leichte Aufnahme ermöglicht oder unterstützt wird.

Die vorgenannten Aspekte und Merkmale der vorliegenden Erfindung können beliebig miteinander kombiniert, aber auch unabhängig voneinander realisiert werden.

Weitere Aspekte, Merkmale, Eigenschaften und Vorteile der vorliegenden Erfindung ergeben sich aus den Ansprüchen und werden nachfolgend anhand der Zeichnung einer bevorzugten Ausfuhrungsform näher erläutert. Es zeigt:
- Fig. 1: einen schematischen Schnitt eines vorschlagsgemäßen Systems beim Ansetzen eines vorschlagsgemäßen Werkzeug zum Setzen eines Dübels zum Befestigen einer Dämmplatte an einem Bauwerk;
- Fig. 2: eine schematische perspektivische Ansicht des Werkzeugs;
- Fig. 3: einen zu Fig. 1 korrespondierenden Schnitt des Systems mit gesetztem bzw. in das Bohrloch eingeführtem Dübel; und

- Fig. 4: einen zu Fig. 1 korrespondierenden schematischen Schnitt des Systems mit fertig montiertem Dübel.

In den Figuren werden für gleiche Bauteile die gleichen Bezugszeichen verwendet, wobei sich entsprechende oder gleiche Vorteile ergeben, auch wenn eine wiederholte Beschreibung weggelassen ist.

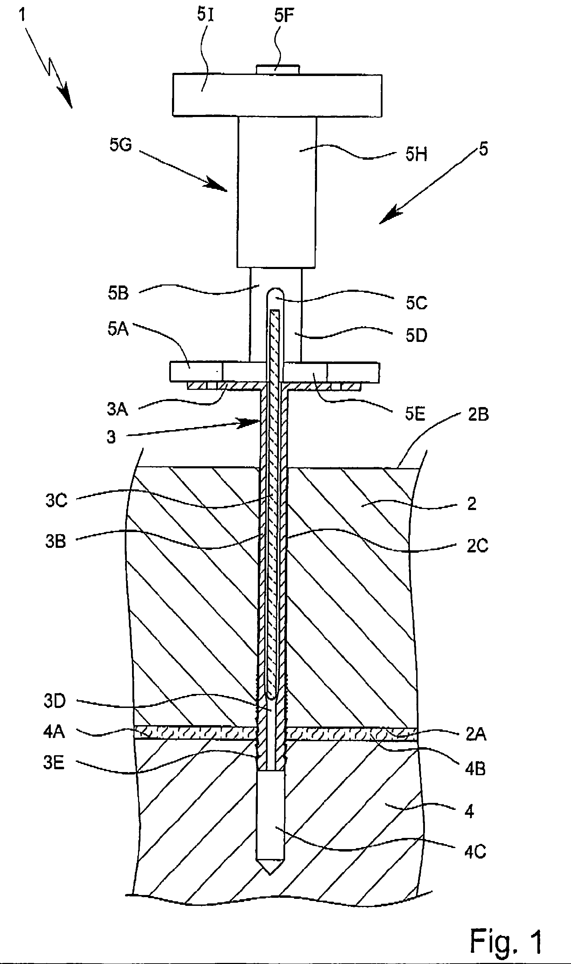

Fig. 1 zeigt in einem sehr schematischen, nicht maßstabsgerechten Schnitt eine bevorzugte Ausführungsform eines vorschlagsgemäßen Systems 1 zur Wärmedämmung bzw. Befestigung von Dämmplatten 2 mit Dübeln 3 an einem Bauwerk 4. Dargestellt ist in Fig. 1 nur ein Ausschnitt bzw. Teil des Systems 1 bzw. einer Dämmplatte 2 mit einem Dübel 3 bzw. im Bereich eines Dübels 3. Vorzugsweise sind einer Dämmplatte 2 bzw. jeder Dämmplatte 2 mehrere Dübel 3 zugeordnet.

Nachfolgend wird primär nur auf eine Dämmplatte 2 und einen Dübel 3 zur Befestigung der Dämmplatte 2 Bezug genommen, auch wenn das System 1 vorzugsweise oder üblicherweise mehrere Dämmplatten 2 umfasst, die insbesondere auf Stoß angeordnet werden und/oder eine möglichst durchgehende Dämmschicht zur Dämmung des Bauwerks 4 bilden.

Die Dämmplatte 2 dient insbesondere der Wärmedämmung bzw. Wärmeisolierung. Die Dämmplatte 2 ist aus einem entsprechenden Dämmstoff hergestellt, insbesondere besteht die Dämmplatte 2 im Wesentlichen oder ausschließlich aus diesem Dämmstoff. Vorzugsweise wird ein geschäumter Dämmstoff, wie expandiertes Polystyrol, o. dgl. eingesetzt.

Die Dämmplatte 2 ist vorzugsweise zumindest im Wesentlichen quadratisch oder rechteckig ausgebildet. Jedoch kann die Dämmplatte 2 grundsätzlich auch jede sonstige Form aufweisen.

Die Dämmplatte 2 weist üblicherweise eine Dicke von mehreren cm, beispielsweise von 6 bis 30 cm, meistens etwa von 10 bis 16 cm, auf.

Die Dämmplatte 2 wird mit einer Flachseite am Bauwerk 4 befestigt. Diese Flachseite wird hier als Bauwerkseite 2A bezeichnet.

Bei dem Bauwerk 4 handelt es sich insbesondere um ein Gebäude, eine Mauer, eine Wand, besonders bevorzugt eine Außenwand, eine Decke o. dgl. Die Dämmplatte 2 kann mit ihrer Bauwerkseite 2A unmittelbar an dem Bauwerk 4 bzw. deren Oberfläche 4A angebracht werden. Jedoch kann zwischen dem Bauwerk 4 und der Dämmplatte 2 - zumindest bereichsweise, ggf. aber auch vollflächig - ein Hohlraum oder eine Schicht 4B, wie eine Zwischenschicht oder Verbindungsschicht, besonders bevorzugt zum Ausgleichen von Unebenheiten und/oder zum Verbinden bzw. Verkleben, wie in Fig. 1 angedeutet, vorgesehen sein. Besonders bevorzugt ist die Dämmplatte 2 mit dem Bauwerk 4 bzw. dessen Oberfläche 4A verklebt oder auf sonstige Weise, insbesondere materialschlüssig, verbunden.

Die Oberfläche 4A des Bauwerks 4 kann insbesondere von einem Putz, von Mauerwerk oder dergleichen gebildet sein. Insbesondere kann die Oberfläche 4A eine Fassade des Bauwerks 4 bilden oder darstellen.

Der Dübel 3 weist einen Dübelteller 3A und einen sich daran anschließenden, länglichen Dübelschaft 3B auf.

Der Dübelteller 3A und der Dübelschaft 3B sind vorzugsweise einstückig ausgebildet.

Bei dem Dübel 3 handelt es sich insbesondere um einen sogenannten Tellerdübel und/oder Schlagdübel.

Der Dübelteller 3A ist vorzugsweise flach und/oder ringscheibenartig, ggf. auch mit Durchbrechungen, Ausnehmungen oder dgl., ausgebildet. Der Dübelteller 3A kann beispielsweise eine kreisförmige oder sonstige Außenkontur aufweisen.

Der Dübelteller 3A weist vorzugsweise eine Dicke von nur wenigen Millimetern, insbesondere zwischen 1 mm bis 3 mm, auf. Der Dübelteller 3A ist also vorzugsweise relativ dünn ausgeführt.

Der Dübelteller 3A ist flächig an eine Dämmplattenseite, insbesondere an eine Flachseite oder Außenseite 2B der Dämmplatte 2, anlegbar. Die Tellerebene verläuft also zumindest im Wesentlichen parallel zur Dämmplattenebene.

Der Dübelschaft 3B erstreckt sich vorzugsweise senkrecht zum Dübelteller 3A. Zur Befestigung der Dämmplatte erstreckt sich der Dübel 3 mit seinem Schaft 3B durch eine Durchbrechung, insbesondere Bohrung 2C, durch die Dämmplatte 2 hindurch in eine sich anschließende Ausnehmung, insbesondere Bohrung 4C des Bauwerks 4, also in das Bauwerk 4. Der Dübelschaft 3B ist daher vorzugsweise zumindest im Wesentlichen stiftartig und/oder zylindrisch bzw. länglich ausgebildet. Die Bohrungen 2C und 4C werden vorzugsweise vor dem ersten, insbesondere manuellen Einführen bzw. Einstecken des Dübels 3 gebohrt, insbesondere mittels eines entsprechend langen Bohrers. Insbesondere erfolgt also vor dem Einführen des Dübels 3 in die Dämmplatte 2 vorzugsweise ein Bohren, wodurch die Bohrungen 2C und 4C erzeugt oder gebildet werden. Insbesondere wird mit einem Bohrer zunächst die Dämmplatte 2 unter Bildung der Bohrung 2C in der Dämmplatte 2 durchbohrt und direkt in das darunterliegende Bauwerk 4 unter Bildung der Bohrung 4C gebohrt.

Der Dübel 3 weist vorzugsweise ein Spreizelement 3C zum Spreizen des Dübels 3 bzw. Dübelschafts 3B, zumindest in einem vorderen und/oder in das Bauwerk 4 bzw. dessen Bohrung 4C hineinreichenden Bereich bzw. Kopfbereich, auf.

Das Spreizelement 3C ist vorzugsweise zumindest im Wesentlichen stiftförmig, zylindrisch und/oder länglich ausgebildet.

Der Dübel 3 weist eine entsprechende axiale Ausnehmung 3D zur Aufnahme des Spreizelements 3C auf.

Der Dübel 3 ist vorzugsweise aus Kunststoff und/oder einem sonstigen geeigneten Material hergestellt. Das Spreizelement 3C ist vorzugsweise aus Kunststoff oder einem sonstigen geeignetem Material hergestellt.

Das Spreizelement 3C ist vorzugsweise einteilig ausgebildet, kann aber insbesondere zur Realisierung entsprechender Längen auch mehrteilig gestaltet sein.

Das Spreizelement 3C ist vorzugsweise schlank ausgebildet, kann aber zur Aussteifung mit entsprechenden Versteilungselementen, wie Rippen oder dgl., versehen sein.

Das Spreizelement 3C kann an seinem über den Dübelteller 3A vorragenden Teil einen Kopf aufweisen, der in dem Dübel 3 bzw. Dübelteller 3A aufgenommen werden kann.
Fig. 1 zeigt den Dübel 3 in einem vormontierten Zustand, nämlich mit bereits teilweise aufgenommenem bzw. eingestecktem Spreizelement 3C. In diesem Zustand ist der Dübel 3 bzw. Dübelschaft 3B nicht aufgespreizt. Ein Teil des Spreizelements 3C ragt aus dem Dübel 3 heraus bzw. über den Dübelteller 3A nach außen vor, wie in Fig. 1 angedeutet.
Fig. 1 zeigt den Dübel 3 weiter in einem schon in die Dämmplatte 2 eingesteckten Zustand. Insbesondere erstreckt sich der Dübelschaft 3B bereits in die Bohrung 2C oder durch die Dämmplatte 2 bzw, deren Bohrung 2C hindurch bis zum Bauwerk 4 und/oder in einen Anfangsbereich der Bohrung 4C in das Bauwerk 4 etwas hinein. Diese Ausgangsposition wird insbesondere dadurch erreicht, dass der Dübel 3 manuell oder auf sonstige geeignete Weise mit dem Dübelschaft 3B eingeführt bzw. eingesteckt wird.

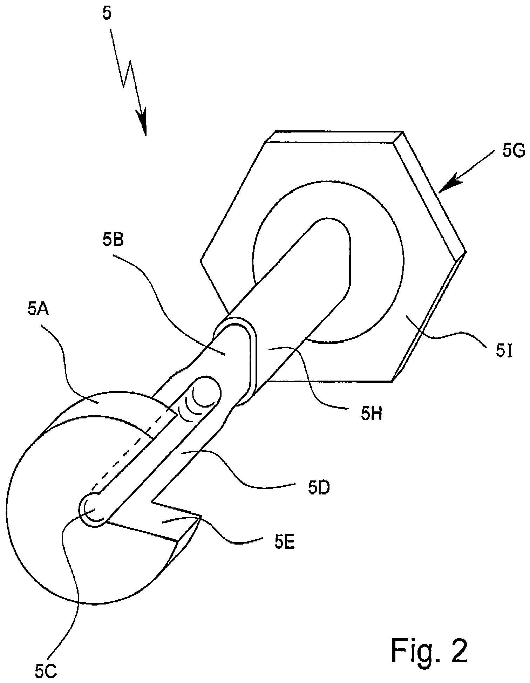

Anschließend erfolgt das korrekte Positionieren bzw. Einführen des Dübels 3, also das Setzen des Dübels 3. Dieses Setzen erfolgt bei der vorliegenden Erfindung mittels eines Werkzeugs 5. Fig. 1 zeigt den Dübel 3 mit bereits angesetztem Werkzeug 5. Fig. 2 zeigt in einer schematischen, perspektivischen Darstellung eine besonders bevorzugte Ausgestaltung des vorschlagsgemäßen Werkzeugs 5.

Grundsätzlich kann der Dübel 3 auch erst nach Ansetzen des Werkzeugs 5 bzw. mit dem Werkzeug 5 mit seinem Dübelschaft 3B in die Dämmplatte 2 bzw. deren Bohrung 2C einführt oder eingesteckt werden. Besonders bevorzugt erfolgt ein erstes Einführen oder Einstecken des Dübels 3 jedoch vorab insbesondere manuell oder auf sonstige geeignete Art und Weise, wie bereits erwähnt.

Das Werkzeug 5 weist einen Werkzeugkopf 5A zum Anlegen an dem Dübelteller 3A und/oder zum Eintreiben des Dübels 3 in die Bohrung 2C, 4C und/oder zum Eindrücken des Dübelteller 3A in die Dämmplatte 2 bzw. deren Außenseite 2B auf.

Der Werkzeugkopf 5A ist scheibenartig oder plattenartig ausgebildet und an einem vorderen Ende oder Endabschnitt des Werkzeugs 5 gebildet oder angeordnet.

Das Werkzeug 5 weist einen sich an den Werkzeugkopf 5A anschließenden Schaft 5B auf. Insbesondere erstreckt sich der Schaft 5B senkrecht zu der von dem Werkzeugkopf 5A gebildeten Anlage- oder Druckfläche und/oder axial bzw. in Einführ- und/oder Einschlagrichtung.

Der Schaft 5B ist auf der der Dämmplatte 2 abgewandten Seite des Werkzeugkopfs 5A angeordnet und gegenüber dem Werkzeugkopf wesentlich dünner.

Der Werkzeugkopf 5A und der Schaft 5B sind vorzugsweise einstückig ausgebildet.

Das Werkzeug 5 ist zur Aufnahme des über den Dübelteller 3A nach außen vorragenden Teils des Spreizelements 3C ausgebildet. Das Werkzeug 5 weist hierzu eine entsprechende, axial nach vorne, also zum Dübel 3 hin offene Aussparung 5C auf. Die Aussparung 5C erstreckt sich insbesondere durch den Werkzeugkopf 5A in den sich anschließenden Schaft 5B hinein.

Durch die Aussparung 5C ist es möglich, den Werkzeugkopf 5A am Dübelteller 3A anzulegen und eine Kraft auf den Dübel 3 auszuüben, ohne dass das Spreizelement 3C (weiter) in den Dübel 3 bzw. Dübelschaft 3B eingeschoben oder eingeführt wird, also ohne dass eine Kraft auf das Spreizelement 3C ausgeübt wird.

Um ein einfaches Aufnehmen des über den Dübelteller 3A nach außen vorragenden Teils des Spreizelements 3C in die Aussparung 5C zu ermöglichen, ist das Werkzeug 5 bzw. die Aussparung 5C bzw. der Werkzeugkopf 5A und/oder Schaft 5B seitlich offen und/oder geschlitzt ausgebildet, insbesondere mit einer entsprechenden seitlichen Freimachung oder Öffnung 5D versehen. Dementsprechend kann das Werkzeug 5 mit seinem Werkzeugkopf 5A seitlich auf den Dübelteller 3A aufgesetzt werden, wobei die seitliche Öffnung 5D zu dem über den Dübelteller 3A vorragenden Teil des Spreizelements 3C weist. Dann kann das Werkzeug 5 seitlich bzw. radial verschoben werden, wobei der Werkzeugkopf 5A insbesondere über den Dübelteller 3A gleitet, so dass der über den Dübelteller 3A vorragende Teil des Spreizelements 3C seitlich in die Aussparung 5C bewegt und darin aufgenommen wird. Dies ermöglicht also ein sehr einfaches bzw. leichtes Ansetzen des Werkzeugs 5 und/oder ein sehr leichtes seitliches bzw. radiales Aufnehmen des über den Dübelteller 3 vorragenden Teils des Spreizelements 3C in dem Werkzeug 5 bzw. dessen Aussparung 5C.

Wie bereits erwähnt, ist der Werkzeugkopf 5A plattenartig oder scheibenartig, insbesondere ringscheibenartig oder ringflanschartig ausgebildet. Beim Darstellungsbeispiel ist der Werkzeugkopf 5A zur Bildung der seitlichen Öffnung 5D besonders bevorzugt sektorartig ausgespart oder ausgeschnitten. Insbesondere bilden die zumindest im Wesentlichen radial, entlang des Sektorausschnitts verlaufenden Wandungen 5E des Werkzeugkopfs 5A eine Einführschräge, wodurch das seitliche oder radiale Aufnehmen des über den Dübelteller 3A vorragenden Teils des Spreizelements 3C weiter erleichtert oder vereinfacht wird.

Der von der Einführschräge bzw. den Wandungen 5E eingeschlossenen Winkel beträgt vorzugsweise weniger als 180°, insbesondere weniger als 120°, besonders bevorzugt weniger als 60°, und/oder vorzugsweise mehr als 10°, insbesondere mehr als 20°, und/oder insbesondere im Wesentlichen zwischen 30° und 40°. So ergibt sich eine sehr einfache, intuitive Handhabung.

Das Werkzeug 5 weist vorzugsweise ein Schlagende 5F an dem dem Werkzeugkopf 5A gegenüberliegenden bzw. hinteren Ende auf. Das Schlagende 5F ist insbesondere von dem vorzugsweise durchgehenden Schaft 5B des Werkzeugs 5 gebildet.

Besonders bevorzugt weist das Werkzeug 5 keine beweglichen Teile und/oder nur ein einziges und/oder einstückiges Metallteil auf, das beim Darstellungsbeispiel den Werkzeugkopf 5A und den Schaft 5B mit dem Schlagende 5F bildet. Jedoch sind auch andere konstruktive Lösungen möglich.

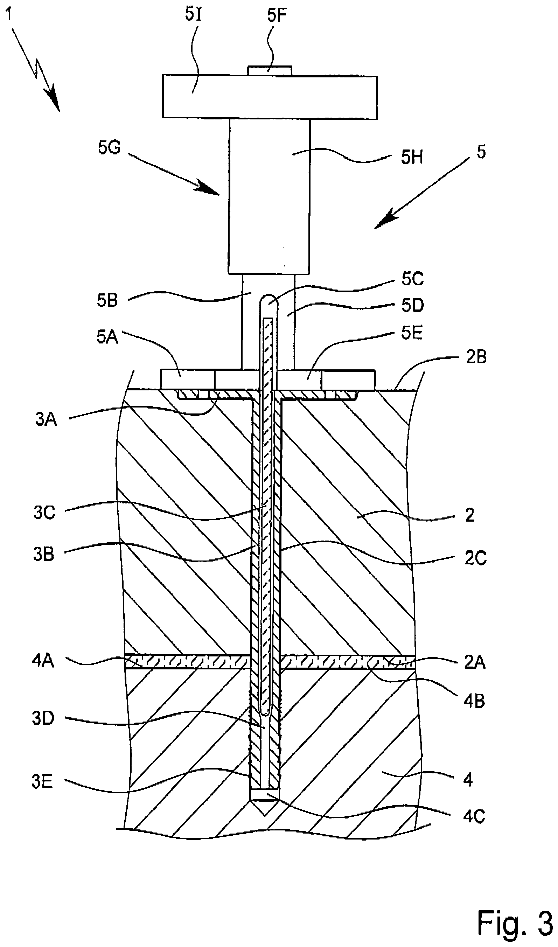

Das Werkzeug 5 weist vorzugsweise ein gummielastisches und/oder sonstiges Halteteil 5G auf, das beim Darstellungsbeispiel den Schaft 5B zumindest teilweise umgibt und/oder einen länglichen Griffabschnitt 5H und/oder einen insbesondere flanschartigen bzw. ringscheibenartigen Handschutz 51 aufweist oder bildet. Dementsprechend kann das Werkzeug 5 sehr einfach durch Umgreifen des Griffabschnitts 5H von einem nicht dargestellten Benutzer ergriffen bzw. gehalten werden, während mit einem nicht dargestellten Hammer in der anderen Hand auf das Schlagende 5F des Werkzeugs 5 geschlagen werden kann, um den Dübel 3 zu Setzen bzw. zu Positionieren, insbesondere ausgehend von der Darstellung gemäß Fig. 1 den Dübel 3 (weiter) in die Bohrung 4C bzw. das Bauwerk 4 einzutreiben und schließlich den Dübelteller 3A in die Dämmplatte 2 einzudrücken, also den Dämmstoff partiell zu komprimierten, so dass der Dübel 3 mit seinem Dübelteller 3A zumindest im Wesentlichen flächenbündig mit der Dämmplatte 2 abschließt bzw. die Außenseite des Dübeltellers 3A zumindest im Wesentlichen in einer Ebene mit der Außenseite 2B der Dämmplatte 2 liegt. Dieser gesetzte Zustand ist in Fig. 3 schematisch gezeigt, die einen zu Fig. 1 korrespondierenden Ausschnitt der Dämmplatte 2 in einem schematischen Schnitt zeigt.

Das Halteteil 5G ist vorzugsweise einstückig ausgebildet und/oder auf den Schaft 5B aufgepresst oder aufgeschoben. Jedoch kann das Halteteil 5G auch beispielsweise an den Schaft 5B bzw. das Werkzeug 5 angespritzt und/oder in sonstiger Weise damit verbunden sein.

Der Werkzeugkopf 5A steht vorzugsweise seitlich über den Dübelteller 3A über. Der Werkzeugkopf 5A ist also insbesondere größer als der Dübelteller 3A ausgebildet. Vorzugsweise ragt der Werkzeugkopf 5A im Mittel mehr als 5 mm oder 10 mm seitlich über den Dübelteller 3A vor. Dieser seitlich vorragende Randbereich, insbesondere in Form eines Ringrands, bildet eine Anlagefläche, die beim Setzen des Dübels 3 bzw. Eindrücken des Dübeltellers 3A auf der glatten bzw. ebenen bzw. nicht eingedrückten Außenseite 2B der Dämmplatte 2 zur Anlage kommt. Durch entsprechende Dimensionierung dieses zur Anlage kommenden Randbereichs, insbesondere durch eine entsprechend große Ausführung, besonders bevorzugt von mindestens 10 cm² oder mehr, wird erreicht, dass beim Schlagen auf das Werkzeug 5 bzw. dessen Schlagende 5F der Dübel 3 bzw. Dübelteller 3A nur soweit eingedrückt wird, bis der gewünschte zumindest im Wesentlichen flächenbündige oder glatte oder ebene Abschluss mit der Außenseite 2B der Dämmplatte 2 erreicht wird. Fig. 3 veranschaulicht in schematischer Weise diesen gesetzten Zustand. Der Dübelteller 3A ist also (leicht bzw. etwas) in die Dämmplatte 2 eingedrückt, so dass der Dübel 3 bzw. Dübelteller 3A über die Außenseite 2B der Dämmplatte 2 nicht mehr vorragt bzw. vorsteht.

In dem gesetzten Zustand ist der Dämmstoff zumindest bereichsweise, insbesondere unter dem Dübelteller 3A etwas komprimiert bzw. zusammengedrückt. Um bei dem anschließenden Entfernen des Werkzeugs 5 ein unerwünschtes Rückstellen des Dämmstoffs und ein damit einhergehendes unerwünschtes Herausbewegen des Dübels 3 aus dem Bohrloch 4C zu verhindern, weist der Dübel 3 bzw. Dübelschaft 3B vorzugsweise ein derartiges Übermaß und/oder seitliche Vorsprünge 3E, insbesondere im Bereich des vorderen Endes des Dübels 3 bzw. Dübelschafts 3B, auf, so dass der Dübel 3 im gesetzten, aber noch nicht aufgespreizten Zustand, also bei noch nicht vollständig eingeführten Spreizelement 3C, bereits durch einen Klemm- bzw. Presssitz in der Dämmplatte 2 und/oder dem Bauwerk 4 bzw. in der Bohrung 2C und/oder 4C sitzt bzw. gehalten wird.

Nach dem Setzten des Dübels 3 wird das Werkzeug 5 wieder entfernt. Dies kann sehr einfach durch axiales Abziehen bzw. Wegbewegen erfolgen.

Nach dem Entfernen des Werkzeugs 5 wird das Spreizelement 3C nun vollständig in den Dübel 3 eingeführt, insbesondere eingeschlagen. Hierdurch wird der Dübel 3 bzw. Dübelschaft 3B, insbesondere im Bereich des vorderen Endes bzw. im Bauwerk 4 bzw. in der Bohrung 4C aufgespreizt, so dass der Dübel 3 fest mit dem Bauwerk 4 verbunden bzw. in diesem verankert wird.

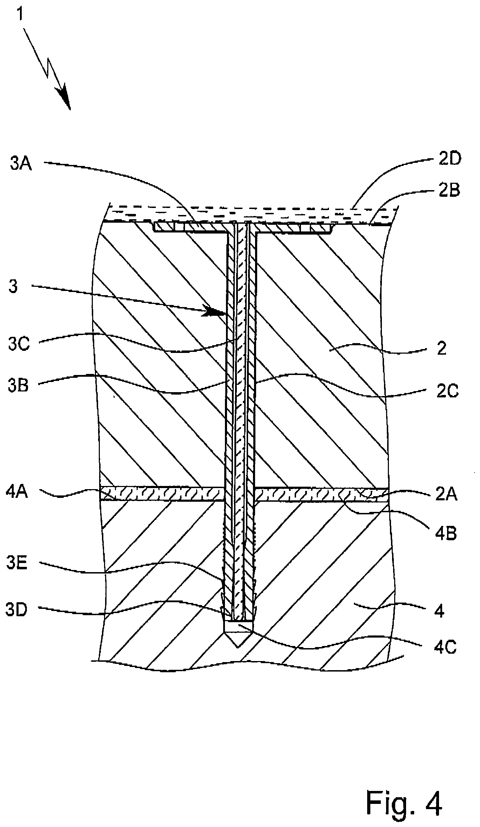

Das Spreizelement 3C wird vorzugsweise derart in den Dübel 3 eingeführt bzw. eingeschlagen, dass es zumindest im Wesentlichen flächenbündig mit der Außenseite des Dübeltellers 3A und/oder der Außenseite 2B der Dämmplatte 2 abschließt. Fig. 4 veranschaulicht diesen Zustand in einem zu den Fig. 1 und Fig. 3 korrespondierenden schematischen Schnitt.

Die Dämmplatte 2 ist nun durch den Dübel 3 befestigt.

Der Dübel 3 führt zu einem vorzugsweise glatten Abschluss mit der Außenseite 2B und der Dämmplatte 2.

Das vorzugsweise zumindest im Bereich des Dübeltellers 3A aus Kunststoff oder einem sonstigen wärmeisolierenden Material bestehende Spreizelement 3C verhindert eine unerwünschte Wärmebrückenbildung.

In Fig. 4 ist schematisch angedeutet, dass das vorschlagsgemäße System 1 bzw. die befestigte Dämmplatte 2 außenseitig vorzugsweise abgedeckt wird, insbesondere durch einen Putz 2D. Bei diesem Putz 2D handelt es sich insbesondere um ein Material oder einen Aufbau auf Mineralbasis, Kunststoffbasis o. dgl., das bzw. der vorzugsweise durch ein Gewebe verstärkt ist. Der Putz 2D ist vorzugsweise sehr dünn ausgeführt und bildet insbesondere eine gegenüber dem Dämmstoff bzw. der Dämmplatte 2 relativ harte Oberfläche und/oder schützt die Dämmplatte 2 vor Umwelteinflüssen, wie Schlagregen, Druckbeanspruchung, Sonneneinstrahlung o. dgl.

Das vorschlagsgemäße System 1 zur Wärmedämmung bzw. Befestigung von Dämmplatten weist die Dämmplatten 2 und Dübel 3 sowie das Werkzeug 5 auf.

### Bezugszeichenliste:

- 1: System
- 2: Dämmplatte
2A Bauwerkseite
2B Außenseite
2C Bohrung
2D Putz
- 3: Dübel
3A Dübelteller
3B Dübelschaft
3C Spreizelement
3D Ausnehmung
3E Vorsprung
- 4: 4A Oberfläche
4B Schicht
4C Bohrung
- 5: Werkzeug
5A Werkzeugkopf
5B Schaft
5C Aussparung
5D seitliche Öffnung
5E Wandung
5F Schlagende
5G Halteteil
5H Griffabschnitt
51 Handschutz

## Patentansprüche

1. System (1) zur Befestigung von Dämmplatten (2) mit Dübeln (3) an einem Bauwerk (4),
wobei das System (1) die Dämmplatten (2), die Dübel (3) und ein Werkzeug (5) aufweist,
wobei die Dübel (3) mittels des Werkzeugs (5) gesetzt werden und wobei die Dübel (3) jeweils einen auf einer Außenseite (2B) der jeweiligen Dämmplatte (2) anlegbaren Dübelteller (3A) und einen sich anschießenden Dübelschaft (3B), der mittels eines stiftförmigen Spreizelements (3C) aufspreizbar ist, aufweisen, und
wobei das Werkzeug (5) einen scheibenartigen oder plattenartigen Werkzeugkopf (5A) zum Eindrücken des Dübeltellers (3A) in eine zugeordnete Dämmplatte (2) und einen sich an den Werkzeugkopf (5A) anschließenden Schaft (5B) aufweist,
**dadurch gekennzeichnet,**
**dass** das Spreizelement (3C) bei nicht aufgespreiztem Dübelschaft (3B) mit einem Teil über den Dübelteller (3A) nach außen vorragt, und
**dass** der Werkzeugkopf (5A) und der Schaft (5B) eine nach vorne bzw. zum Dübel (3) hin offene Aussparung (5C) mit einer seitlichen Öffnung (5D) zur seitlichen Aufnahme des vorragenden Teils des Spreizelements (3C) aufweist, wobei sich die Aussparung (5C) durch den Werkzeugkopf (5A) in den sich anschließenden Schaft (5B) erstreckt.

2. System nach Anspruch 1, **dadurch gekennzeichnet, dass** die Dübelteller (3A) mittels des Werkzeugs (5) derart gesetzt sind, dass die Dämmplatten (2) eingedrückt sind, so dass die Außenseite der Dübelteller (3A) zumindest im Wesentlichen in einer gemeinsamen Ebene mit der Außenseite (2A) der Dämmplatten liegt und/oder die Dübelteller (3A) zumindest im Wesentlichen flächenbündig mit dieser abschließen.

3. System nach Anspruch 1 oder 2, **dadurch gekennzeichnet, dass** die Spreizelemente (3C) im vollständig in den Dübelschaft (3B) eingeführten Zustand jeweils zumindest im Wesentlichen flach außenseitig mit dem jeweiligen Dübelteller (3A) abschließen.

4. System nach einem der voranstehenden Ansprüche, **dadurch gekennzeichnet, dass** das Werkzeug (5) gemäß einem der Ansprüche 5 bis 8 ausgebildet ist.

5. Werkzeug (5) zum Setzen von Dübeln (3) zur Befestigung von Dämmplatten (2), wobei die Dübel (3) jeweils einen auf einer Außenseite (2B) der jeweiligen Dämmplatte (2) anlegbaren Dübelteller (3A) und einen sich anschießenden Dübelschaft (3B), der mittels eines stiftförmigen Spreizelements (3C) aufspreizbar ist, aufweisen, wobei das Werkzeug (5) einen scheibenartigen Werkzeugkopf (5A) zum Eindrücken des Dübeltellers (3A) in eine zugeordnete Dämmplatte (2) und einen sich axial anschließenden Schaft (5B) aufweist,
**dadurch gekennzeichnet,**
**dass** der Werkzeugkopf (5A) und der Schaft (5B) eine nach vorne bzw. zum Dübel (3) hin offene Aussparung (5C) mit einer seitlichen Öffnung (5D) zur radialen bzw, seitlichen Aufnahme eines über den Dübelteller (3A) vorragenden Teils des Spreizelements (3C) aufweisen, und
**dass** der Werkzeugkopf (5A) seitlich sektorartig ausgespart ist und eine Einführschräge für das Spreizelement (3C) aufweist oder bildet.

6. Werkzeug nach Anspruch 5, **dadurch gekennzeichnet, dass** Werkzeug (5) starr und/oder einteilig ausgebildet ist.

7. Werkzeug nach Anspruch 5 oder 6, **dadurch gekennzeichnet, dass** Werkzeug (5) ein einstückiges Metallteil und ein gummielastisches Halteteil (5G) aufweist oder daraus besteht.

8. Werkzeug nach einem der Ansprüche 5 bis 7, **dadurch gekennzeichnet, dass** der Werkzeugkopf (5A) zumindest im Wesentlichen scheibenartig oder plattenartig, insbesondere ringscheibenartig oder ringflanschartig, ausgebildet ist.

9. Werkzeug nach einem der Ansprüche 5 bis 8, **dadurch gekennzeichnet, dass** zumindest im Wesentlichen radial, entlang des Sektorausschnitts verlaufende Wandungen (5E) des Werkzeugkopfes (5A) die Einführschräge bilden.

10. Verfahren zum Befestigen von Dämmplatten (2) mit Dübeln (3) an einem Bauwerk (4),
wobei die Dübel (3) mittels eines Werkzeugs (5) gesetzt werden und wobei die Dübel (3) jeweils einen auf einer Außenseite (2B) der jeweiligen Dämmplatte (2) anlegbaren Dübelteller (3A) und einen sich anschießenden Dübelschaft (3B), der mittels eines stiftförmigen Spreizelements (3C) aufspreizbar ist, aufweisen, und
wobei das Werkzeug (5) einen scheibenartigen oder plattenartigen Werkzeugkopf (5A) zum Eindrücken des Dübeltellers (3A) in eine zugeordnete Dämmplatte (2) und einen sich an den Werkzeugkopf (5A) anschließenden Schaft (5B) aufweist,
**dadurch gekennzeichnet,**
**dass** der Werkzeugkopf (5A) und der Schaft (5B) eine nach vorne bzw. zum Dübel (3) hin offene Aussparung (5C) mit einer seitlichen Öffnung (5D) aufweist, wobei sich die Aussparung (5C) durch den Werkzeugskopf (5A) in den sich anschließenden Schaft (5B) erstreckt,
**dass** das Werkzeug (5) seitlich auf ein über den Dübelteller (3A) nach außen vorragendes Spreizelement (3C) aufgeschoben wird, wobei der vorragende Teil des Spreizelements (3C) in die seitliche Öffnung (5D) radial bzw. seitlich aufgenommen wird,
**dass** anschließend mittels des Werkzeugkopfs (5A) des Werkzeugs (5) der Dübelteller (3A) in die Dämmplatte (2) zum Setzen derart eingedrückt wird, dass die Außenseite des Dübeltellers (3A) zumindest im Wesentlichen in einer Ebene mit der Außenseite der Dämmplatte (2) liegt bzw. flächenbündig mit dieser abschließt, während gleichzeitig der noch nicht aufgespreizte Dübelschaft (3B) in einem Klemm- oder Preßsitz in einer zugeordneten Bohrung (2C, 4C) in der zugeordneten Dämmplatte (2) und/oder in dem Bauwerk (4) aufgenommen wird, und
**dass** anschließend das Werkzeug (5) entfernt und dann das Spreizelement (3C) zum Aufspreizen des Dübelschafts (3B) in den Dübel (3) vollständig eingeführt oder eingeschlagen wird.

11. Verwendung eines Werkzeugs (5) gemäß einem der Ansprüche 5 bis 9 zum Setzen von Dübeln (3) zur Befestigung von Dämmplatten (2) eines gemäß den Ansprüchen 1 bis 4 ausgebildeten Systems (1).

## Claims

1. System (1) for attaching insulating boards (2) to a structure (4) using dowels (3),
wherein the system (1) comprises the insulating boards (2), the dowels (3) and a tool (5),
wherein the dowels (3) are set by means of the tool (5) and wherein the dowels (3) each comprise a dowel plate (3A) that can be abutted against an outer side (2B) of the respective insulating board (2) and an adjoining dowel shaft (3B) which can be spread by means of a pin-shaped spreading element (3C), and
wherein the tool (5) comprises a disc-like or plate-like tool head (5A) for pushing the dowel plate (3A) into an associated insulating board (2) and a shaft (5B) adjoined to the tool head (5A),
**characterised**
**in that** for a dowel shaft (3B) that has not been spread, a part of the spreading element (3C) protrudes outwards above the dowel plate (3A), and
**in that** the tool head (5A) and the shaft (5B) comprise a recess (5C) open at the front or towards the dowel (3), having a lateral opening (5D) for laterally receiving the protruding part of the spreading element (3C), wherein the recess (5C) extends through the tool head (5A) into the adjoining shaft (5B).

2. System according to claim 1, **characterised in that** the dowel plates (3A) are set in such a way by means of the tool (5) that the insulating boards (2) are indented, such that the outer side of the dowel plates (3A) lie at least substantially in a common plane with the outer side (2A) of the insulating boards and/or the dowel plates (3A) are at least substantially flush with said outer side.

3. System according to claim 1 or 2, **characterised in that**, when fully introduced into the dowel shaft (3B), the spreading elements (3C) each end at least substantially flat at the outride with the respective dowel plate (3A).

4. System according to one of the preceding claims, **characterised in that** the tool (5) is designed according to one of claims 5 to 8.

5. Tool (5) for setting dowels (3) for attaching insulating boards (2), wherein the dowels (3) each comprise a dowel plate (3A) that can be abutted against an outer side (2B) of the respective insulating board (2) and an adjoining dowel shaft (3B), which can be spread by means of a pin-shaped spreading element (3C),
wherein the tool (5) comprises a disc-like tool head (5A) for pushing the dowel plate (3A) into an associated insulating board (2) and a shaft (5B) adjoined axially thereto,
**characterised**
**in that** the tool head (5A) and the shaft (5B) comprise a recess (5C) open at the front or towards the dowel (3), having a lateral opening (5D) for radially and/or laterally receiving a part of the spreading element (3C) protruding above the dowel plate (3A), and
**in that** the tool head (5A) has lateral, sector-like cut-outs and comprises or forms a lead-in charter for the spreading element (3C).

6. Tool according to claim 5, **characterised in that** the tool (5) is constructed rigid and/or as one-piece.

7. Tool according to claim 5 or 6, **characterised in that** the tool (5) comprises or consists of a single piece metal part and a rubber elastic retaining part (5G).

8. Tool according to one of claims 5 to 7, **characterised in that** the tool head (5A) is designed, at least substantially, disc-like or plate-like, in particular ring disc-like or ring flange-like.

9. Tool according to one of claims 5 to 8, **characterised in that** walls (5E) of the tool head (5A), extending at least substantially radially along the sector cut out, form the lead-in charter.

10. Method for attaching insulating boards (2) with dowels (3) to a structure (4), wherein the dowels (3) are set by means of a tool (5) and wherein the dowels (3) each comprise a dowel plate (3A) that can be abutted against an outer side (2B) of the respective insulating board (2) and an adjoining dowel shaft (3B), which can be spread by means of a pin-shaped spreading element (3C), and
wherein the tool (5) comprises a disc-like or plate-like tool head (5A) for pushing the dowel plate (3A) into an associated insulating board (2) and a shaft (5B) adjoined to the tool head (5A),
**characterised**
**in that** the tool head (5A) and the shaft (5B) comprise a recess (5C) open at the front or towards the dowel (3), having a lateral opening (5D), wherein the recess (5C) extends through the tool head (5A) into the adjoining shaft (5B),
**in that** the tool (5) is pushed laterally onto a spreading element (3C) projecting outwards above the dowel plate (3A), wherein the projecting part of the spreading element (3C) is radially or laterally received in the lateral opening (5D),
**in that**, then, by means of the tool head (5A) of the tool (5), the dowel plate (3A) for setting is pressed into the insulating board (2), in such a way that the outer side of the dowel plate (3A) lies at least substantially in a plane with the outer side of the insulating board (2) or ends flush with said outer side, while at the same time the dowel shaft (3B) that has not yet been spread is received in a clamping or pressing seat in an associated hole (2C, 4C) in the associated insulating board (2) and/or in the structure (4), and
**in that** the tool (5) is then removed and the spreading element (3C) is then introduced or knocked into the dowel (3) completely in order to spread the dowel shaft (3B).

11. Use of a tool (5) according to one of claims 5 to 9 for setting dowels (3) for attaching insulating plates (2) of a system (1) designed according to one of claims 1 to 4.

## Revendications

1. Système (1) de fixation de plaques d'isolation (2) avec des chevilles (3) sur un ouvrage (4),
le système (1) présentant les plaques d'isolation (2), les chevilles (3) et un outil (5), les chevilles (3) étant placées au moyen de l'outil (5) et les chevilles (3) présentant respectivement une plaque pour cheville (3A) appliquée sur un côté externe (2B) de chaque plaque d'isolation (2) et une tige de cheville (3B) lui faisant suite, pouvant être écartée au moyen d'un élément d'écartement en forme de broche (3C) et
l'outil (5) présentant une tête d'outil (5A) en forme de disque ou de plaque afin de presser sur la plaque pour cheville (3A) dans une plaque d'isolation attribuée (2) et un arbre (5B) faisant suite à la tête d'outil (5A),
**caractérisé**
**en ce que** l'élément d'écartement (3C), lorsque la tige de cheville (3B) n'est pas écartée, fait saillie avec une partie au-delà de la plaque pour cheville (3A) vers l'extérieur et
**en ce que** la tête d'outil (5A) et l'arbre (5B) présentent un évidement (5C) ouvert vers l'avant ou vers la cheville (3) avec une ouverture latérale (5D) pour la réception latérale de la partie en saillie de l'élément d'écartement (3C), l'évidement (5C) s'étendant à travers la tête d'outil (5A) dans l'arbre (5B) qui lui fait suite.

2. Système selon la revendication 1 **caractérisé en ce que** la plaque pour cheville (3A) est placée au moyen de l'outil (5) de telle sorte que les plaques d'isolation (2) soient pressées, de sorte que le côté externe de la plaque pour cheville (3A) repose au moins essentiellement dans un plan commun avec le côté externe (2A) des plaques d'isolation et/ou que la plaque pour cheville (3A) soit essentiellement à fleur de celles-ci.

3. Système selon la revendication 1 ou 2, **caractérisé en ce que** les éléments d'écartement (3C) se terminent dans l'état entièrement introduit dans la tige de cheville (3B) respectivement au moins essentiellement à plat sur le côté externe par rapport à la plaque pour cheville respective (3A).

4. Système selon une des revendications précédentes, **caractérisé en ce que** l'outil (5) est conçu selon une des revendications 5 à 8.

5. Outil (5) pour placer des chevilles (3) pour la fixation de plaques d'isolation (2), les chevilles (3) présentant respectivement une plaque pour cheville (3A) appliquée sur un côté externe (2B) de chaque plaque d'isolation (2) et une tige de cheville (3B) lui faisant suite, pouvant être écartée au moyen d'un élément d'écartement en forme de broche (3C),
l'outil (5) présentant une tête d'outil (5A) en forme de disque afin de presser sur la plaque pour cheville (3A) dans une plaque d'isolation attribuée (2) et un arbre (5B) lui faisant suite au plan axial,
**caractérisé**
**en ce que** la tête d'outil (5A) et la tige (5B) présentent un évidement (5C) ouvert vers l'avant ou vers la cheville (3) avec une ouverture latérale (5D) pour la réception radiale ou latérale d'une partie en saillie au-delà de la plaque pour cheville (3A) de l'élément d'écartement (3C) et
**en ce que** la tête d'outil (5A) est évidé latéralement sous forme de secteur et présente ou forme une rampe d'introduction pour l'élément d'écartement (3C).

6. Outil selon la revendication 5, **caractérisé en ce que** l'outil (5) est formé rigide et/ou d'une seule pièce.

7. Outil selon la revendication 5 ou 6, **caractérisé en ce que** l'outil (5) présente une partie métallique d'un seul tenant et une partie de retenue (5G) de caoutchouc élastique ou est constitué de celles-ci.

8. Outil selon une des revendications 5 à 7, **caractérisé en ce que** la tête d'outil (5A) est formée de manière au moins essentiellement en forme de disque ou de plaque, en particulier en forme de rondelle annulaire ou de collet annulaire.

9. Outil selon une des revendications 5 à 8, **caractérisé en ce que** les parois (5E) s'étendant au moins essentiellement de manière radiale le long de la section de secteur de la tête d'outil (5A) forment la rampe d'introduction.

10. Procédé de fixation de plaques d'isolation (2) avec des chevilles (3) sur un ouvrage (4),
les chevilles (3) étant placées au moyen d'un outil (5) et les chevilles (3) présentant respectivement une plaque pour cheville (3A) appliquée sur un côté externe (2B) de chaque plaque d'isolation (2) et une tige de cheville (3B) lui faisant suite, pouvant être écartée au moyen d'un élément d'écartement en forme de broche (3C) et
l'outil (5) présentant une tête d'outil (5A) en forme de disque ou de plaque afin de presser sur la plaque pour cheville (3A) dans une plaque d'isolation attribuée (2) et un arbre (5B) faisant suite à la tête d'outil (5A),
**caractérisé**
**en ce que** la tête d'outil (5A) et l'arbre (5B) présentent un évidement (5C) ouvert vers l'avant ou vers la cheville (3) avec une ouverture latérale (5D), l'évidement (5C) s'étendant à travers la tête d'outil (5A) dans l'arbre (5B) qui lui fait suite,
**en ce que** l'outil (5) est poussé latéralement sur un élément d'écartement (3C) faisant saillie vers l'extérieur au-delà de la plaque pour cheville (3A), la partie en saillie de l'élément d'écartement (3C) étant reçue dans l'ouverture latérale (5D) de façon radiale ou latérale,
**en ce qu'**ensuite, au moyen de la tête d'outil (5A) de l'outil (5), la plaque pour cheville (3A) est pressée dans la plaque d'isolation (2) pour y être placée de sorte que le côté externe de la plaque pour cheville (3A) repose au moins essentiellement dans un plan avec le côté externe de la plaque d'isolation (2) ou se termine à fleur avec celle-ci, pendant, en même temps, que l'arbre de cheville (3B) pas encore écarté est reçu dans un siège de blocage ou de pression dans un alésage correspondant (2C, 4C) dans la plaque d'isolation (2) attribuée et/ou dans l'ouvrage (4) et
**en ce qu'**ensuite l'outil (5) est retiré puis l'élément d'écartement (3C) est totalement introduit ou inséré, pour écarter la tige de cheville (3B), dans la cheville (3).

11. Utilisation d'un outil (5) selon une des revendications 5 à 9 pour placer des chevilles (3) pour la fixation de plaques d'isolation (2) d'un système (1) conçu selon les revendications 1 à 4.
